# EUROPEAN PATENT APPLICATION

(11) **EP 4 292 857 A1**
(43) Date of publication of application: **20.12.2023**
(21) Application number: 23175548.9
(22) Date of filing: 26.05.2023
(51) Int. Cl.: B60K 35/00, B60K 37/06

(54) **DISPLAY CONTROLLER**

(30) Priority: 16.06.2022 JP 2022097339
(71) Applicant: Suzuki Motor Corporation, Hamamatsu-shi, Shizuoka 432-8611 (JP)
(72) Inventor: NOMURA, Shota, Hamamatsu-shi,, 432-8611 (JP)
(74) Representative: Haseltine Lake Kempner LLP

(57) **Abstract**

A display controller (100) that controls a display device (200) mounted on a vehicle including a display control unit (103) configured to control the display device (200) to display as selectable an overspeed display mode in which the display device (200) displays according to a difference between current vehicle speed and reference vehicle speed and an overspeed non-display mode in which the display device (200) does not display according to the difference between the current vehicle speed and the reference vehicle speed and control the display device (200) to forcibly display the overspeed display mode when the current vehicle speed is determined to be in an overspeed state.

## Description

### TECHNICAL FIELD

The present invention relates to a display controller that controls a display device mounted on a vehicle.

### BACKGROUND ART

In a vehicle such as an automatic vehicle, vehicle speed (referred to as "current vehicle speed" in the present application) measured by a vehicle speed sensor is generally displayed, and further information based on the current vehicle speed is displayed in certain vehicles. For example, Patent Literature 1 discloses a speed sensation control device that calculates a size of an inverted triangle that is visual information based on traveling speed and displays the inverted triangle having the calculated size on a windshield.

### CITATION LIST

### PATENT LITERATURE

Patent Literature 1: JP5256075B

### SUMMARY OF INVENTION

### TECHNICAL PROBLEM

When the information based on the current vehicle speed is constantly displayed, a driver who does not need to constantly check the information based on the current vehicle speed may feel bothered since unnecessary information enters a field of view. Therefore, a configuration is conceivable in which the driver can select not to display the information based on the current vehicle speed. However, when the information based on the current vehicle speed is selected not to be displayed, the information based on the current vehicle speed would be not used even in a situation where the information is useful, and effects thereof cannot be exhibited.

The present invention is made in view of such circumstances, and an object of the present invention is to make it possible to select not to display information based on current vehicle speed and to make the information based on the current vehicle speed available in a situation where the information is useful.

### SOLUTION TO PROBLEM

According to an aspect of the present invention, there is provided a display controller that controls a display device mounted on a vehicle including a display control unit configured to control the display device to display as selectable an overspeed display mode in which the display device displays according to difference between current vehicle speed and reference vehicle speed and an overspeed non-display mode in which the display device does not display according to the difference between the current vehicle speed and the reference vehicle speed, and control the display device to forcibly display the overspeed display mode when the current vehicle speed is determined to be in an overspeed state.

### ADVANTAGEOUS EFFECTS OF INVENTION

According to the present invention, it is possible to select not to display information based on current vehicle speed and to make the information based on the current vehicle speed available in a situation where the information is useful.

### BRIEF DESCRIPTION OF DRAWINGS

Fig. 1 shows a configuration of a display system of a vehicle according to an embodiment;
Fig. 2 is a flowchart of a process performed by a display controller according to the embodiment;
Figs. 3A to 3C show a display example of an overspeed display mode;
Figs. 4A to 4C show a display example of an overspeed non-display mode;
Fig. 5 shows an example of an allowable lateral vehicle speed associated with a road curvature radius and a road surface friction coefficient µ; and
Figs. 6A to 6D show longitudinal overspeed determination and lateral overspeed determination.

### DESCRIPTION OF EMBODIMENTS

According to an aspect of the present invention, there is provided a display controller (100) that controls a display device (200) mounted on a vehicle including a display control unit (103) configured to control the display device (200) to display as selectable an overspeed display mode in which the display device (200) displays according to a difference between current vehicle speed (V) and reference vehicle speed (Vs) and an overspeed non-display mode in which the display device (200) displays according to the difference between the current vehicle speed (V) and the reference vehicle speed (Vs), and control the display device (200) to forcibly display the overspeed display mode when the current vehicle speed (V) is determined to be in an overspeed state. Accordingly, it is possible to select not to display information on the difference between the current vehicle speed (V) and the reference vehicle speed (Vs), and to make the information on the difference between the current vehicle speed (V) and the reference vehicle speed (V_{S}) available in a situation where the information is useful.

Hereinafter, a preferred embodiment of the present invention will be described with reference to the accompanying drawings. In the present application, a traveling direction of a vehicle is referred to as a longitudinal direction, and a left-right direction relative to the traveling direction is referred to as a lateral direction.

### [Embodiments]

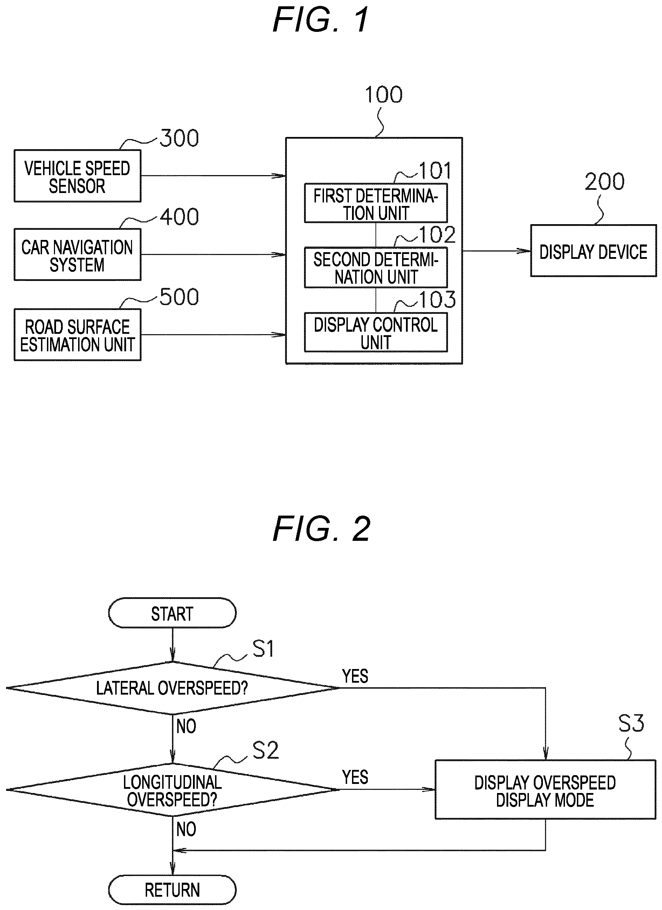

Fig. 1 shows a configuration of a display system of a vehicle according to an embodiment. A display device 200 is mounted around a periphery of a driver seat of the vehicle. The display device 200 is, for example, an electronic device that displays information on a windshield, a head up display (HUD), a meter panel, or the like.

A display controller 100 controls the display device 200 mounted on the automatic vehicle. The display controller 100 includes a first determination unit 101, a second determination unit 102, and a display control unit 103.

The display controller 100 receives vehicle speed (current vehicle speed) measured by a vehicle speed sensor 300. The display controller 100 further receives car navigation information acquired by a car navigation system 400. The car navigation information includes road legal speed V_{LS} during traveling and a road curvature radius during traveling. Although the road legal speed V_{LS} during traveling and the road curvature radius during traveling are acquired from the car navigation system 400, the road legal speed V_{LS} during traveling and the road curvature radius during traveling may be acquired by another unit such as an in-vehicle camera. The display controller 100 further receives information on a road surface condition estimated by a road surface estimation unit 500. The information on the road surface condition includes a road surface friction coefficient µ. The road surface estimation unit 500 may adopt a known technique and a description thereof is omitted here.

The first determination unit 101 performs overspeed determination according to a determination criterion in the longitudinal direction (hereinafter referred to as longitudinal overspeed determination), and determines whether current vehicle speed V is in an overspeed state relative to the road legal speed V_{LS} during traveling. As described above, the road legal speed V_{LS} during traveling can be acquired from the car navigation system 400.

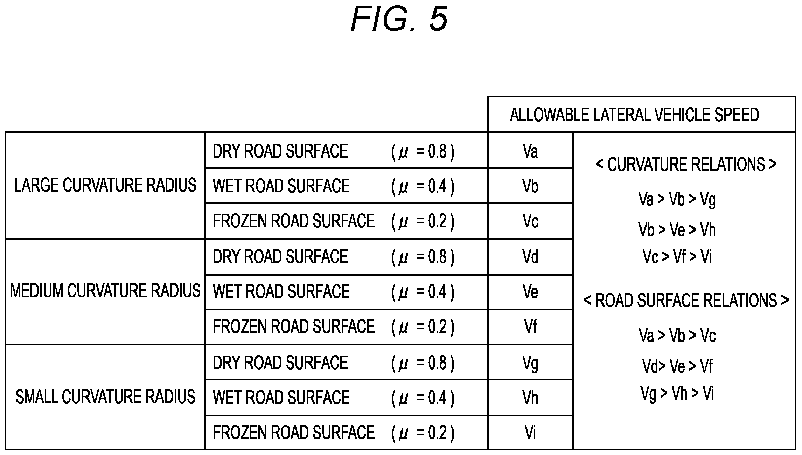

The second determination unit 102 performs overspeed determination according to a determination criterion in the lateral direction (hereinafter referred to as lateral overspeed determination), and determines whether the current vehicle speed V is in the overspeed state relative to allowable lateral vehicle speed V_{L}. The allowable lateral vehicle speed V_{L} is a maximum speed at which the vehicle can travel on a road curve without running out of a lane. For example, the allowable lateral vehicle speed V_{L} is stored in advance in association with the road curvature radius and the road surface friction coefficient µ. Fig. 5 shows an example of the allowable lateral vehicle speed V_{L} associated with the road curvature radius and the road surface friction coefficient µ. The allowable lateral vehicle speed V_{L} = Vₐ to Vᵢ is determined in a manner of being divided by large, medium, and small curvature radii and large, medium, and small road surface friction coefficients µ. The allowable lateral vehicle speed V_{L} tends to decrease as the curvature radius decreases (becomes a sharp curve), and the allowable lateral vehicle speed V_{L} tends to decrease as the road surface friction coefficient µ decreases (becomes slippery). As described above, the road curvature radius during traveling can be acquired from the car navigation system 400, the road surface friction coefficient µ can be acquired from the road surface estimation unit 500, and thus the allowable lateral vehicle speed V_{L} can be determined.

The display control unit 103 controls the display device 200 to display as selectable an overspeed display mode and an overspeed non-display mode selectable. When contents displayed in the overspeed display mode and contents displayed in the overspeed non-display mode are all displayed, it is necessary for the display device 200 to be capable of displaying a large amount of information at a once, and more information than necessary may be provided to the driver. Since the overspeed display mode and the overspeed non-display mode are selectable, it is not necessary for the display device 200 to display a large amount of information at a once, and only necessary information can be provided to the driver.

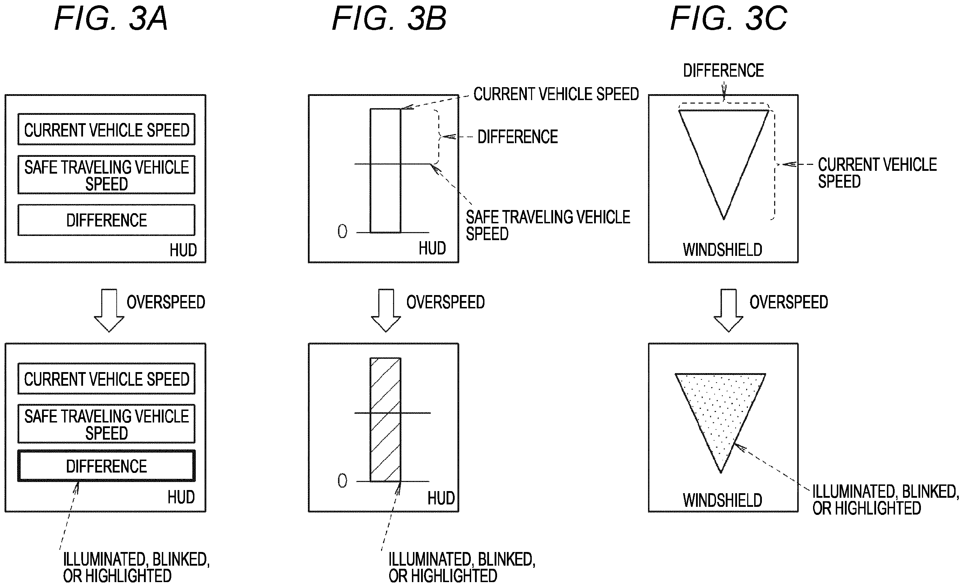

The overspeed display mode is a display mode in which the display device 200 displays according to a difference between the current vehicle speed V and reference vehicle speed. The reference vehicle speed is vehicle speed determined from a viewpoint of safe traveling and stable traveling, and is hereinafter referred to as safe traveling vehicle speed Vs. As will be described later, the safe traveling vehicle speed Vs corresponds to one of the road legal speed V_{LS} during traveling and the allowable lateral vehicle speed V_{L}. In Figs. 3A to 3C show display examples of the overspeed display mode. In the overspeed display mode, the display device 200 displays according to a difference (V - Vs) between the current vehicle speed V and the safe traveling vehicle speed Vs. Accordingly, the driver can check an overspeed degree of the current vehicle speed V relative to the safe traveling vehicle speed Vs. In the example of Fig. 3A, the current vehicle speed V, the safe traveling vehicle speed Vs, and the difference (V - Vs) are respectively indicated on the HUD by numerical values. In the example of Fig. 3B, the current vehicle speed V is indicated by a height of a bar graph, and the safe traveling vehicle speed V_{S} is indicated by a height position of the bar graph in the HUD. In the example of Fig. 3C, an inverted triangular part is displayed on the windshield, the current vehicle speed V is indicated by a height thereof, and the difference (V - V_{S}) is indicated by a width thereof. A driver who desires to constantly check the overspeed degree of the current vehicle speed V relative to the safe traveling vehicle speed V_{S} can select the overspeed display mode by performing a predetermined operation.

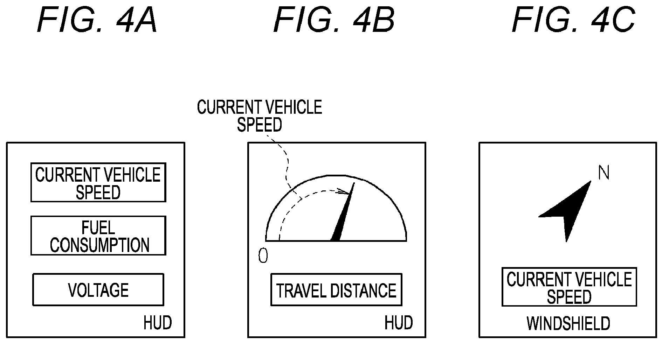

The overspeed non-display mode is a display mode in which the display device 200 does not display according to the difference between the current vehicle speed V and the reference vehicle speed. In Figs. 4A to 4C show display examples of the overspeed non-display mode. In the overspeed non-display mode, the display device 200 displays predetermined information without displaying according to the difference (V - Vs) between the current vehicle speed V and the safe traveling vehicle speed Vs. Accordingly, the driver can check information different from the overspeed degree of the current vehicle speed V relative to the safe traveling vehicle speed Vs. In the example of Fig. 4A, the current vehicle speed V, fuel consumption, and a voltage are indicated by numerical values on the HUD. In the example of Fig. 4B, the current vehicle speed V is indicated by a digitally displayed speed meter, and a travel distance is indicated by a numerical value on the HUD. In the example of Fig. 4C, north is indicated by an arrow mark, and the current vehicle speed V is indicated by a numerical value on the windshield. A driver who desires to check the predetermined information (voltage, fuel consumption, travel distance, travel direction, and the like in the examples of Figs. 4A to 4C) without constantly checking the overspeed degree of the current vehicle speed V relative to the safe traveling vehicle speed Vs can select the overspeed non-display mode by performing a predetermined operation. In the overspeed non-display mode, a display function itself may be assumed to be disabled.

When receiving the determination by the first determination unit 101 and the determination by the second determination unit 102 and determining the current vehicle speed V to be in the overspeed state, the display control unit 103 controls the display device 200 to forcibly displays the overspeed display mode. That is, when determining the current vehicle speed V to be in the overspeed state, the display control unit 103 switches to display the overspeed display mode even when the overspeed non-display mode was selected. The display control unit 103 in this way functions as a display control unit of the present invention.

Fig. 2 is a flowchart of a process performed by the display controller 100 according to the present embodiment. The flowchart of Fig. 2 is periodically repeated. In step S1, the second determination unit 102 performs the lateral overspeed determination. Specifically, the second determination unit 102 determines whether the current vehicle speed V is in the overspeed state relative to the allowable lateral vehicle speed V_{L}. In the present embodiment, a condition of the overspeed state is that the current vehicle speed V is equal to or higher than vehicle speed obtained by subtracting a predetermined vehicle speed value from the allowable lateral vehicle speed V_{L}. When the overspeed state is determined, the process proceeds to step S3. When no overspeed state is determined, the process proceeds to step S2.

In step S2, the first determination unit 101 performs the longitudinal overspeed determination. Specifically, the first determination unit 101 determines whether the current vehicle speed V is in the overspeed state relative to the road legal speed V_{LS} during traveling. In the present embodiment, a condition of the overspeed state is that the current vehicle speed V is equal to or higher than vehicle speed obtained by adding a predetermined vehicle speed value to the legal speed V_{LS}. A condition of the overspeed state may further be that time during which the current vehicle speed V is equal to or higher than the legal speed V_{LS} is equal to or longer than predetermined time. These conditions may be adopted, and the overspeed state may be determined when any one of the conditions is satisfied. When the overspeed state is determined, the process proceeds to step S3. When no overspeed state is determined, the process exits the flowchart.

In step S3, the display control unit 103 controls the display device 200 to forcibly display the overspeed display mode on an assumption that the current vehicle speed V is determined to be in the overspeed state. That is, even when the overspeed non-display mode was selected, the display control unit 103 switches to display the overspeed display mode. Specifically, when the overspeed display mode is being displayed as shown in Figs. 3A to 3C, the overspeed display mode is continued. When the overspeed non-display mode is being displayed as shown in Figs. 4A to 4C, the overspeed non-display mode is switched to the overspeed display mode as shown in Figs. 3A to 3C. In the overspeed display mode performed in step S3, as shown in Figs. 3A to 3C, a difference display part, the bar graph, the inverted triangular part and the like are illuminated, blinked, or highlighted to notify the driver that the current vehicle speed V is in the overspeed state.

As the determination criteria for determining whether the current vehicle speed V is in the overspeed state described above, two determination criteria including a longitudinal determination criterion in the longitudinal overspeed determination and a lateral determination criterion in the lateral overspeed determination are prepared. The longitudinal determination criterion is a determination criterion according to the difference between the current vehicle speed V and the legal speed V_{LS}, and the lateral determination criterion is a determination criterion according to the difference between the current vehicle speed V and the allowable lateral vehicle speed V_{L}. When the overspeed state is determined in the lateral overspeed determination in step S1, the overspeed display mode is forcibly displayed in step S3. In this way, priority is given to the lateral overspeed determination in step S1 over the longitudinal overspeed determination in step S2. When no overspeed state is determined in the lateral overspeed determination in step S1 and the overspeed state is determined in the longitudinal overspeed determination in step S2, the overspeed display mode is forcibly displayed in step S3.

In the lateral overspeed determination in step S1, a condition of the overspeed state is that the current vehicle speed V is equal to or higher than vehicle speed obtained by subtracting a predetermined vehicle speed value from the allowable lateral vehicle speed V_{L}. This condition can be said to be stricter than the condition in the longitudinal overspeed determination in step S2. The lateral overspeed may cause vehicle behaviors to be immediately unstable and the vehicle may easily deviate from the lane. In some cases, a high level of handling is required to shift to safe driving, and no cornering force may be obtained when deceleration by a brake pedal is fairly strong. In this way, since it is necessary to prevent overspeed in advance in the lateral direction, the overspeed display mode is forcibly displayed in advance.

In contrast, in the longitudinal overspeed determination in step S2, at least one of a condition that the current vehicle speed V is equal to or higher than vehicle speed obtained by adding a predetermined vehicle speed value to the legal speed V_{LS} and a condition that time during which the current vehicle speed V is equal to or higher than the legal speed V_{LS} is equal to or longer than predetermined time is set as a condition of the overspeed state. This condition can be said to be gentler than the condition in the lateral overspeed determination in step S1. The longitudinal overspeed is less likely to cause vehicle behaviors to be significantly unstable immediately, and there is sufficient time for the driver to notice the overspeed and decelerate, and it can be said that the vehicle can easily shift to safe traveling by releasing an accelerator pedal or depressing the brake pedal. In this way, the forcible display of the overspeed display mode tends to be restrained in the longitudinal direction.

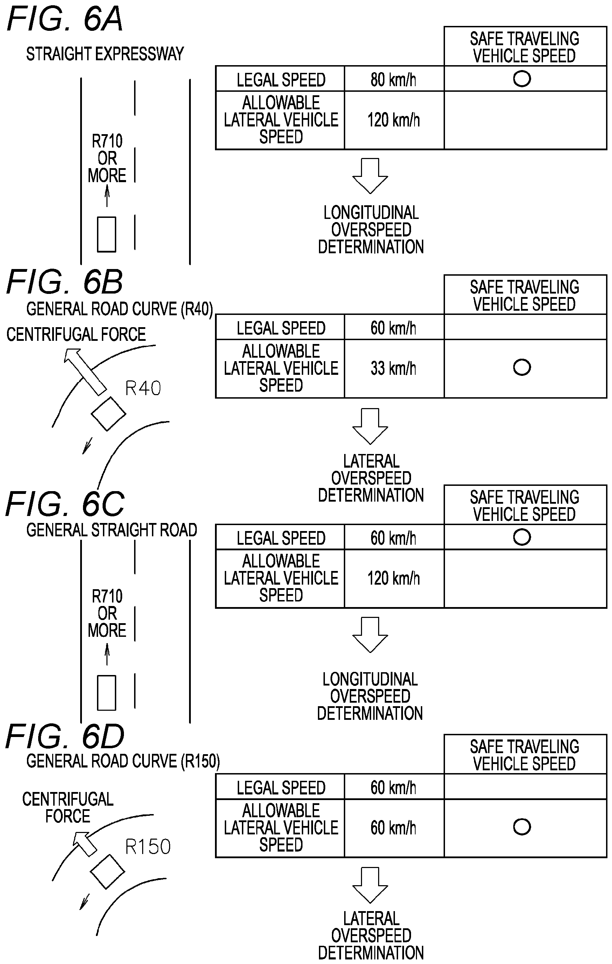

Specific examples of the longitudinal overspeed determination and the lateral overspeed determination will be described with reference to Figs. 6A to 6D. Figs. 6A to 6D show the longitudinal overspeed determination and the lateral overspeed determination. Fig. 6A shows a state in which the vehicle is traveling on a straight expressway. The legal speed V_{LS} 80 km/h, and the allowable lateral vehicle speed V_{L} is 120 km/h. In this case, the overspeed state is determined in step S1 when the current vehicle speed V exceeds, for example, 100 km/h, and the overspeed state is unlikely to be determined in step S1. Further, the overspeed state may be determined in step S2, and the safe traveling vehicle speed V_{S} can be said to correspond to the legal speed V_{LS}. When traveling on a straight road having a large curvature radius, the vehicle is less likely to run out of the lane, and the allowable lateral vehicle speed V_{L} is also large. Accordingly, the overspeed display mode according to the longitudinal overspeed determination is more likely to be forcibly displayed than that according to the lateral overspeed determination. Fig. 6C shows a state in which the vehicle is traveling on a general straight road. The legal speed V_{LS} 60 km/h, and the allowable lateral vehicle speed V_{L} is 120 km/h. Also in this case, the same situation as that shown in Fig. 6A can be said.

Fig. 6B shows a state in which the vehicle is traveling on a general road curve (R40). The legal speed V_{LS} is 60 km/h, and the allowable lateral vehicle speed V_{L} is 33 km/h. The smaller the curvature radius, the smaller the allowable lateral vehicle speed V_{L} tends to be, and the allowable lateral vehicle speed V_{L} may be smaller than the legal speed V_{LS}. In this case, the overspeed state is determined in step S1 before being determined in step S2. Therefore, the safe traveling vehicle speed Vs can be said to correspond to the allowable lateral vehicle speed V_{L}. Since a generated centrifugal force is larger as the curvature radius is smaller, the vehicle is more likely to run out of the lane. Therefore, when the allowable lateral vehicle speed V_{L} is smaller than the legal speed V_{LS}, the overspeed display mode according to the lateral overspeed determination is forcibly displayed.

Fig. 6D shows a state in which the vehicle is traveling on a general road curve (R150). The legal speed V_{LS} is 60 km/h, and the allowable lateral vehicle speed V_{L} is 60 km/h. In this case, the overspeed state is determined in step S1 before being determined in step S2. Therefore, the safe traveling vehicle speed Vs can be said to correspond to the allowable lateral vehicle speed V_{L}. In this way, the lateral overspeed determination is prioritized on a curve where the legal speed V_{LS} is equal to the allowable lateral vehicle speed V_{L}.

As described with reference to Figs. 6B to 6D, on the general straight road and the general road curve that have the same legal speed V_{LS}, forcible display of the overspeed display mode by the longitudinal overspeed determination tends to be restrained on the straight road, whereas forcible display of the overspeed display mode by the lateral overspeed determination is performed in advance on the curve where vehicle behaviors are more likely to be unstable.

As described above, since the overspeed display mode and the overspeed non-display mode are selectable, unnecessary display can be restrained for a driver who does not need to constantly check the overspeed degree of the current vehicle speed V relative to the safe traveling vehicle speed Vs. Since the overspeed display mode is forcibly displayed when the current vehicle speed V is determined to be in the overspeed state, information on the difference between the current vehicle speed V and the safe traveling vehicle speed V_{S} can be available in a situation where the information is useful.

In the present application, the overspeed state means not only a state in which the current vehicle speed V is actually equal to or higher than certain vehicle speed but also, for example, a state in which the current vehicle speed V is predicted to equal certain vehicle speed or higher.

In the present embodiment, the allowable lateral vehicle speed V_{L} is determined using the road curvature radius and the road surface friction coefficient µ as parameters. Alternatively, other parameters (for example, crosswind speed, vehicle characteristics) may also be used. An upper limit value may be set for the allowable lateral vehicle speed V_{L} so that the driver can set the overspeed display mode to be forcibly displayed in advance.

Further, the lateral overspeed determination may be applied only when the road on which the vehicle is currently traveling is predicted to come to a road having a small curvature radius on a one way road or at a T-shaped junction intersection, or when a road can be predicted by a car navigation system, and the overspeed determination may be performed by allocating the current vehicle speed V and the allowable lateral vehicle speed V_{L} before the vehicle enters a curve.

Although the embodiment of the present invention is described in detail with reference to the drawings, the embodiment is merely a specific example for carrying out the present invention. The technical scope of the present invention is not limited to the example. Various modifications are possible without departing from the spirit of the present invention, and the modifications are also included in the technical scope of the present invention. The display controller to which the present invention is applied is implemented by a computer device including a CPU, a ROM, a RAM, and the like, and functions of the respective units are implemented by executing, for example, a predetermined program stored in the ROM by the CPU. The display controller to which the present invention is applied may be implemented by a plurality of cooperating computer devices.

### REFERENCE SIGNS LIST

100: display controller
101: first determination unit
102: second determination unit
103: display control unit
200: display device
300: vehicle speed sensor
400: car navigation system
500: road surface estimation unit

## Claims

1. A display controller (100) that controls a display device (200) mounted on a vehicle, the display controller (100) comprising:
a display control unit (103) configured to:
control the display device (200) to display as selectable an overspeed display mode in which the display device (200) displays according to a difference between current vehicle speed and reference vehicle speed and an overspeed non-display mode in which the display device (200) does not displays according to the difference between the current vehicle speed and the reference vehicle speed; and
control the display device (200) to forcibly display the overspeed display mode when the current vehicle speed is determined to be in an overspeed state.

2. The display controller (100) according to claim 1, further comprising:
a first determination unit (101) configured to determine whether the current vehicle speed is in the overspeed state relative to road legal speed during traveling; and
a second determination unit (102) configured to determine whether the current vehicle speed is in the overspeed state relative to allowable lateral vehicle speed that is a maximum speed at which the vehicle can travel on a road curve without running out of a lane, wherein
the display control unit (103) controls the display device (200) to forcibly display the overspeed display mode when the current vehicle speed is determined to be in the overspeed state by the second determination unit (102), and
the display control unit (103) controls the display device (200) to forcibly display the overspeed display mode when the current vehicle speed is determined not to be in the overspeed state by the second determination unit (102) and the current vehicle speed is determined to be in the overspeed state is determined by the first determination unit (101).

3. The display controller (100) according to claim 2, wherein the first determination unit (101) determines that the current vehicle speed is in the overspeed state based on at least one of a condition that the current vehicle speed is equal to or faster than vehicle speed obtained by adding a predetermined vehicle speed value to the legal speed and a condition that time during which the current vehicle speed is equal to or faster than the legal speed is equal to or longer than predetermined time.

4. The display controller (100) according to claim 2 or 3, wherein the second determination unit (102) determines that the current vehicle speed is in the overspeed state based on a condition that the current vehicle speed is equal to or greater than vehicle speed obtained by subtracting a predetermined vehicle speed value from the allowable lateral vehicle speed.

5. The display controller (100) according to claim 1 or 2, wherein
the overspeed display mode is a display mode that a driver can check an overspeed degree of the current vehicle speed relative to the reference vehicle speed, and
the overspeed non-display mode is a display mode that the driver can check information different from the overspeed degree of the current vehicle speed relative to the reference vehicle speed.
